Europäisches Patentamt

European Patent Office

Office européen des brevets

(11) Publication number: 0 206 820
A2

# EUROPEAN PATENT APPLICATION

(21) Application number: 86304926.8

(22) Date of filing: 25.06.86

(51) Int. Cl.⁴: C01B 31/06 , B01J 3/06

(30) Priority: 27.06.85 ZA 854874

(43) Date of publication of application:
30.12.86 Bulletin 86/52

(84) Designated Contracting States:
DE GB NL

(71) Applicant: DE BEERS INDUSTRIAL DIAMOND
DIVISION (PROPRIETARY) LIMITED
8th Floor 45 Main Street
Johannesburg Transvaal(ZA)

(72) Inventor: Seal, Michael
5 Guido Gezelle Straat
1077 WN Amsterdam(NL)
Inventor: Davies, Geoffrey John
36, Boundary Road Linden Extension
Randburg Transvaal(ZA)
Inventor: Robertson, Stuart Hedley
2 Heerlen Road Ormonde
Johannesburg Transvaal(ZA)

(74) Representative: Ellis-Jones, Patrick George
Armine et al
J.A. KEMP & CO. 14 South Square Gray's Inn
London WC1R 5EU(GB)

(54) Diamond synthesis.

(57) Isotopically pure diamond is produced by subjecting isotopically pure carbon to diamond synthesis conditions, preferably in the presence of a diamond solvent. The isotopically pure diamonds have application as heat sinks and diamond radiation counters.

EP 0 206 820 A2

## "DIAMOND SYNTHESIS"

### BACKGROUND OF THE INVENTION

This invention relates to diamond synthesis.

Diamonds have been synthesised commercially for several decades and the technology is now very well developed. Diamond synthesis involves subjecting a source of carbon, particularly graphite, to temperature and pressure conditions in the diamond stable region of the carbon phase diagram in the presence of a diamond solvent (also known as a catalyst). The conditions of diamond synthesis can be tailored to produce diamonds of a particular shape, size and character.

Graphite and other similar carbon sources contain two isotopes of carbon -carbon 12 and carbon 13. The natural balance of carbon 13 in such carbon sources is about 1,1 percent. To the best of the Applicant's knowledge, all diamond synthesis to date has taken place with a carbon source which has this natural balance of carbon 12 and carbon 13 isotopes.

### SUMMARY OF THE INVENTION

According to the present invention, there is provided an isotopically pure diamond particle. "Isotopically pure" means that the carbon in the diamond consists of 99,9 percent carbon 12 isotope or 99,9 percent carbon 13 isotope. The isotopically pure diamond may contain minor quantities of inclusions such as nitrogen or solvent metal, although it is preferred that the particle contains no such inclusions.

The isotopically pure diamond particle has particular application as a heat sink or a diamond radiation counter.

Further according to the invention, there is provided a method of making an isotopically pure diamond including the steps of subjecting an isotopically pure carbon source to conditions of temperature and pressure in the diamond stable region of the phase diagram, preferably in the presence of a diamond solvent, for a time sufficient to produce diamond.

### DETAILED DESCRIPTION OF THE INVENTION

Isotopically pure carbon may be produced from carbon having a natural balance of its two isotopes using known organic chemical methods. The isotopically pure carbon so produced tends to be a glassy carbon which makes it not easily soluble in conventional diamond solvents. To improve the solubility of isotopically pure carbon in diamond solvents, the carbon may be subjected to heat treatment in a non-oxidising atmosphere. Generally the heat treatment will take place in a suitable furnace. Typically the heat treatment will be at a temperature of 2500 -3000°C, preferably 2700°C, and the non-oxidising atmosphere will be nitrogen. It is also preferable to drive off volatile contaminants from the carbon, and this may, for example, be achieved by subjecting the carbon to a vacuum de-gassing process.

The diamond solvent, when used, may be any known in the art. An example of a suitable solvent is an iron/nickel alloy, preferably one containing a major amount by weight of iron.

The diamond synthesis temperature and pressure conditions will be the same as those used in conventional diamond synthesis. Also, standard high pressure/high temperature apparatus may be used. The components necessary for the diamond synthesis will be placed in a suitable and known synthesis capsule prior to insertion into this apparatus.

In an example of the invention, isotopically pure diamond particles containing 99,9 percent carbon 13 were synthesised as follows. Isotopically pure carbon 13 powder was heated in a furnace to 2700°C under an atmosphere of nitrogen. This heat treatment had the effect of partially graphitising the powder. The partially graphitised powder was subjected to a vacuum de-gassing to drive off volatile contaminants. The thus treated powder was mixed with a iron/nickel alloy powder (70:30::Fe:Ni). The weight ratio of metal to carbon was 2:1. The mixture was placed in the reaction capsule of a conventional high temperature/high pressure apparatus and subjected to a pressure of 60 to 65 kilobars and a temperature of about 1500°C. These conditions were maintained for a period of 25 minutes. Recovered from the capsule using conventional recovery techniques was a mass of carbon 13 isotopically pure diamond particles having a peak size of 149 to 177 microns.

Larger isotopically pure diamond particles may be prepared using these particles as source and diamond seed material and then growing diamond on to the seed material using known methods.

If it is desired to produce diamond particles which have a very low nitrogen content, a nitrogen getter should be present in the diamond synthesis capsule during manufacture of the particles or growth of diamond on the seed material. Examples of suitable nitrogen getters are aluminium and titanium which may be present in the form of an alloy, disc or powder.

**Claims**

1.

A method of making an isotopically pure diamond including the step of subjecting an isotopically pure carbon source to diamond stable conditions of temperature and pressure for a time sufficient to produce diamond.

2.

A method according to claim 1 wherein isotopically pure carbon is subjected to the diamond stable conditions of temperature and pressure in the presence of a diamond solvent.

3.

A method according to claim 2 wherein the diamond solvent is an iron/nickel alloy.

4.

A method according to claim 3 wherein the alloy contains a major amount by weight of iron.

5.

A method according to any one of claims 2 to 4 wherein the isotopically pure carbon is heat treated in a non-oxidising atmosphere to render it more soluble in the diamond solvent prior to subjecting it to the diamond stable conditions of temperature and pressure.

6.

A method according to claim 5 wherein the heat treatment is carried out at a temperature in the range 2500 to 3000°C.

7.

A method according to claim 5 or claim 6 wherein the non-oxidising atmosphere is nitrogen.

8.

A method according to any one of the preceding claims wherein volatile contaminants are driven off from the isotopically pure carbon prior to subjecting it to the diamond stable conditions of temperature and pressure.

9.

A method according to claim 8 wherein the volatile contaminants are driven off by vacuum de-gassing the carbon.

10.

A method according to any one of the preceding claims wherein the diamond synthesis takes place in the presence of a nitrogen getter.

11.

A method of claim 10 wherein the nitrogen getter is selected from aluminium and titanium.